# NEUE EUROPÄISCHE PATENTSCHRIFT

(11) **EP 0 927 087 B2**
(45) Veröffentlichungstag und Bekanntmachung des Hinweises auf die Entscheidung über den Einspruch: **07.12.2005**
(45) Hinweis auf die Patenterteilung: 06.03.2002
(21) Anmeldenummer: 98945019.2
(22) Anmeldetag: 17.07.1998
(51) Int. Cl.: B23B 31/02, B23B 31/103, B23B 31/117, B23B 29/04

(54) **VORRICHTUNG ZUR AUFNAHME EINES WERKZEUGS ODER TRÄGERTEILS BEI EINER WERKZEUGMASCHINE ODER SPINDEL**
DEVICE FOR ACCOMMODATING A TOOL OR A SUPPORT ELEMENT IN A MACHINE TOOL OR A SPINDLE
DISPOSITIF DESTINE A RECEVOIR UN OUTIL OU UNE PARTIE SUPPORT DANS UNE MACHINE-OUTIL OU UNE BROCHE

(30) Priorität: 17.07.1997 DE 19730584
(43) Veröffentlichungstag der Anmeldung: 07.07.1999
(73) Patentinhaber: WTO Werkzeug-Einrichtungen GmbH, 77797 Ohlsbach (DE)
(72) Erfinder: JANSEN, Karlheinz, D-77746 Schutterwald (DE)
(74) Vertreter: Goy, Wolfgang
(86) Internationale Anmeldenummer: PCT/DE1998/002052
(87) Internationale Veröffentlichungsnummer: WO 1999/003628

(56) Entgegenhaltungen:
- CH-A- 553 022
- GB-A- 191 027 680
- US-A- 1 815 611
- US-A- 2 442 444

## Beschreibung

Die Erfindung betrifft eine Vorrichtung zur Aufnahme eines Werkzeugs oder Trägerteils bei einer Werkzeugmaschine oder Spindel gemäss dem Oberbegriff des Anspruchs 1; siehe z. B. CH-553 022.

Bekannte Vorrichtungen zur Aufnahme eines angetriebenen oder stehenden Werkzeugs (beispielsweise eines Schneidwerkzeug), oder beliebig anderer Teile (beispielsweise eines Trägerteils für eine Meßeinrichtung) bei einer Werkzeugmaschine oder Spindel weisen eine Werkzeugträgeraufnahme auf, welche entweder als separates Teil an der Werkzeugmaschine angeordnet wird oder aber ein Teil der Werkzeugmaschine als solches ist. Weiterhin ist ein Werkzeugträger vorgesehen, welcher einer Werkzeugaufnahme für das Werkzeug besitzt. Um diesen Werkzeugträger mit der Werkzeugträgeraufnahme dauerhaft verbinden zu können, ist eine Spanneinrichtung vorgesehen. Zu diesem Zweck ist der Werkzeugträger in zwei Bereiche aufgeteilt, nämlich in einen ersten Bereich für die Werkzeugaufnahme sowie in einen zweiten Bereich zur Aufnahme im Maschinenteil oder Spindelteil, wobei in diesem zweiten Bereich die Spanneinrichtung im innern des Werkzeugträgers angeordnet ist. Durch diese gewählte Anordnung der Spanneinrichtung setzt sich die Gesamtlänge des Werkzeugträgers additiv aus den beiden zuvor genannten Bereichen zusammen. Bedingt durch die neu auf den Markt kommenden Werkzeugmaschinen mit immer begrenzter werdendem Arbeitsraum ist diese große Baulänge der Werkzeugträger jedoch von Nachteil.

Davon ausgehend liegt der Erfindung die Aufgabe zugrunde, einen kurz bauenden Werkzeugträger zu schaffen.

Als technische Lösung wird mit der Erfindung eine Vorrichtung gemäss Anspruch 1 vorgeschlagen.

Dadurch ist ein Werkzeugträger-Wechselsystem in kompakter Bauweise für stehende und rotierende Werkzeuge oder für beliebig andere Teile (beispielsweise für ein Trägertell für eine Meßeinrichtung) geschaffen. Die Grundidee des erfindungsgemäßen Werkzeugträger-Wechselsystems besteht darin, die beiden Bereiche des Werkzeugträgers, nämlich den Bereich für die Werkzeugaufnahme und den Bereich der Aufnahme im Maschinenteil oder Spindelteil ineinander zu verschmelzen. Darunter ist zu verstehen, daß die beiden Bereiche zwar in Radialrichtung gesehen voneinander beabstandet sind (wobei der Bereich für die Werkzeugaufnahme innen liegt), daß aber in Axialrichtung gesehen sich die Bereiche überlappen. Durch die erfindungsgemäße Integration der Werkzeugaufnahme des Werkzeugträgers in den Bereich der Werkzeugträgeraufnahme ergibt sich der bereits erwähnte Vorteil der sehr kurzen Baulänge. Durch diese sehr kurze Baulänge ergeben sich darüber hinaus geringe Drehmomente auf die Schnittstelle durch die bei der Bearbeltung auftretenden Querkräfte und hierdurch ein sehr steifer Grundaufbau. Weiterhin sind für die axiale Werkzeugvoreinstellung die Einstellelemente von hinten frei zugänglich. Weiterhin ist es möglich, durch eine geeignete Ausführung der Spanneinrichtung sehr hohe Vorspannungen zu erzielen. Schließlich ist es durch den Aufbau bei angetriebenen Werkzeugen möglich, die Werkzeugträgeraufnahme unterhalb der ersten Spihdellager anzuordnen. Es resultieren daraus kurze Hebelarme, geringe Verformungen und Nachgiebigkeiten. Insgesamt ist somit eine extrem kurz bauende Vorrichtung mit dem Werkzeugträger als durchgängig modulares Werkzeugsystem geschaffen, die es erlaubt, auf Mehrspindelmaschinen und auf allen Maschinen mit kleinsten Bauräumen Werkzeugwechselsysteme mit den bekannten Vorteilen der bekannten Systeme einzusetzen.

Als Spanneinrichtung ist ein außen am Werkzeugträger unmittelbar oder mittelbar angreifender Spannring vorgesehen welcher zwischen sich und der Werkzeugträgeraufnahme den Werkzeugträger fixiert. Die Grundidee hinsichtlich besteht darin, die Spanneinrichtung nicht im Innern des Werkzeugträgers im Anschluß an die Werkzeugaufnahme anzuordnen, sondern als Spanneinrichtung einen Spannring vorzusehen, weicher außen am Gehäuse des Werkzeugträgers angreift und somit in der gleichen Querschnittsebene wie die Werkzeugaufnahme angeordnetwerden kann. Dadurch erfolgt die Verschmelzung der beiden Bereiche des Werkzeugträgers. Somit weist die erfindungsgemäße Vorrichtung drei prinzipielle Bauteile auf, nämlich die Werkzeugträgeraufnahme, weiterhin den eigentlichen Werkzeugträger sowie schließlich die WerkzeugträgerSpanneinrichtung und Verwendung des erfindungsgemäßen Spannringes. Die Werkzeugträgeraufnahme hat dabei eine zylindrische Zentrierung mit stirnseitiger Plananlage, der Werkzeugträger einen Zentrierzylinder ebenfalls mit stirnseitiger Plananlage sowie mit einer Werkzeugaufnahme sowie schließlich der Spannring als Befestigung. Sofern der Spannring "unmittelbar" am Werkzeugträger angreift, ist dadurch ein direkter mechanischer Kontakt zwischen dem Spannring und dem Werkzeugträger vorgesehen. Unter einem "mittelbaren" Angreifen des Spannrings am Werkzeugträger ist zu verstehen, daß noch ein zusätzliches Zwischenelement zwischen dem Spannring und dem Werkzeugträger angeordnet ist, welches erst durch den Spannring in die Fixierposition übergeführt wird und für die Fixierung des Werkzeugträgers zwischen der Werkzeugträgeraufnahme und dem Spannring verantwortlich ist.

Der Spannring hat eine radial nach innen gerichtete Anlagefläche als unmittelbare oder mittelbare Gegenfläche zu einer korrespondierenden Anlagefläche des Werkzeugträgers. Dadurch ist eine technisch einfache Möglichkeit geschaffen, um mittels des erfindungsgemäßen Spannringes den Werkzeugträger zwischen diesem Spannring und der Werkzeugträgeraufnahme festzulegen. Bei der "unmittelbaren" Variante greift die Anlagefläche direkt an der korrespondierenden Gegenanschlagsfläche des Werkzeugträgers an. Bei der "mittelbaren" Variante sind wiederum Zwischenelemente zwischen der Anlagefläche des Spannrings und der Gegenanschlagsfläche des Werkzeugträgers vorzusehen, wie nachfolgend noch auszuführen sein wird.

Die Anlagefläche des Spannring hat einen geringeren Innendurchmesser als der Außendurchmesser des Werkzeugträgers. Der Spannring ist somit bezüglich seiner Radialkontur derart ausgebildet, daß aufgrund der dazu korrespondierenden stirnseitigen Kontur des Werkzeugträgers dieser durch den Spannring durch Formschluß gegen die Werkzeugträgeraufnahme gepreßt werden kann.

Ein Ausführungsbeispiel einer erfindungsgemäßen Vorrichtung unter Aufnahme eines Werkzeugs bei einer Werkzeugmaschine wird nachfolgend anhand der Zeichnungen beschrieben. In diesen zeigt:
- Fig. 1: in einer Längsschnittdarstellung eine Ausführungsform in einer Art Explosionsdarstellung;
- Fig. 2: die Vorrichtung in Fig. 1 in zusammengebautem Zustand;

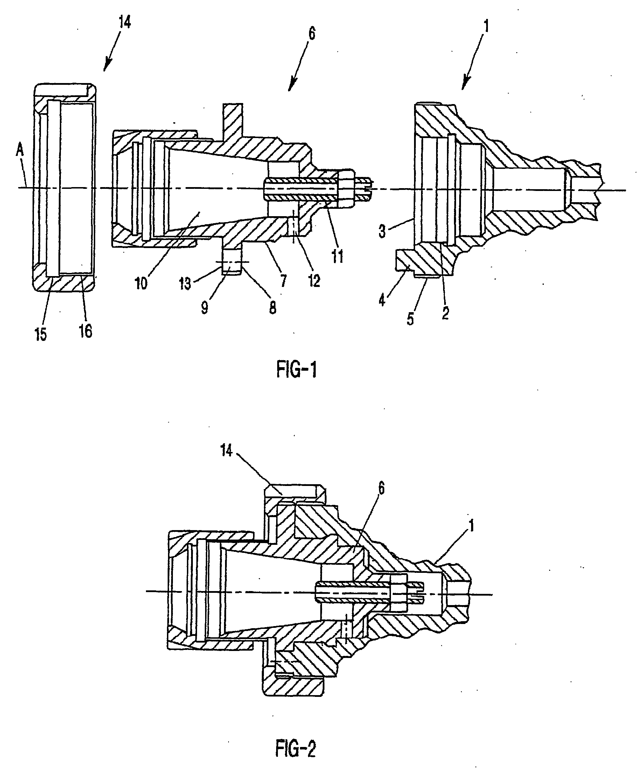

In den Fig. 1 und 2 ist eine Ausführungsform einer erfindungsgemäßen Vorrichtung zur Aufnahme eines Werkzeugs bei einer Werkzeugmaschine dargestellt.

Die Ausführungsform in den Fig. 1 und 2 weist zunächst eine Werkzeugträgeraufnahme 1 auf, welche einer (nicht dargestellten) Werkzeugmaschine zugeordnet ist. Diese Werkzeugträgeraufnahme 1 weist eine Zentrierzylinderaufnahme 2 sowie eine stirnseitige Plananlage 3 auf, weiterhin eine bolzenförmige Lagefixierung 4 zur Aufnahme von überhöhten Drehmomenten und zur Ausrichtung der Winkellage sowie ein Gegengewinde 5 für eine Werkzeugträgerspanneinrichtung.

Als weiteres Bauteil ist ein Werkzeugträger 6 vorgesehen. Dieser Werkzeugträger 6 weist einen Zentrierzylinder7 sowie eine stirnseitige Plananlage 8 auf, weiterhin eine mit der bolzenförmigen Lagefixierung 4 der Werkzeugträgeraufnahme 1 korrespondierende Ausnehmung 9 für die Lagefixierung, eine Werkzeugaufnahme 10, eine axiale Grundeinstellungseinrichtung 11 für die Werkzeuge, Kanäle 12 für das Kühlmittel sowie schließlich eine Anlagefläche 13 für die Werkzeugträgerspannung.

Schließlich weist das Werkzeugträger-Wechselsystem für die Werkzeugträgerspanneinrichtung einen Spannring 14 auf, welcher als Überwurf über den Werkzeugträger 6 ausgebildet ist. Er weist eine radial nach innen gerichtete Anlagefläche 15 auf und ist zu diesem Zweck radial nach innen mit einem L-förmigen Querschnittsprofil umgebördelt. Außerdem weist der Spannring 14 ein Innengewinde 16 auf.

Das Werkzeugträger-Wechselsystem dieser Ausführungsform in den Fig. 1 und 2 funktioniert wie folgt:

Der Werkzeugträger 6 wird mit seinem Zentrierzylinder 7 in die Zentrierzylinderaufnahme 2 der Werkzeugträgeraufnahme 1 gesteckt. Dabei kommt die stirnseitige Plananlage 8 des Werkzeugträgers 6 an der stirnseitigen Plananlage 3 der Werkzeugträgeraufnahme 1 zur Anlage. Außerdem kommt die Ausnehmung 9 des Werkzeugträgers 6 in der bolzenförmigen Lagefixierung 4 der Werkzeugträgeraufnahme 1 zu liegen. Anschließend wird der Spannring 14 mit seinem Innengewinde 16 so lange auf das Gegengewinde 5 der Werkzeugträgeraufnahme 1 aufgeschraubt, bis die Anlagefläche 15 des Spannrings 14 an der Anlagefläche 13 des Werkzeugträgers 6 zu liegen kommt und somit den Werkzeugträger 6 zwischen der Werkzeugträgeraufnahme 1 und dem Spannring 14 fixiert. Bei einem Wechsel des Werkzeugträgers 6 wird der Spannring 14 abgeschraubt und nach einem Austausch des Werkzeugträgers 6 wleder aufgeschraubt.

### Bezugszeichenliste

- 1: Werkzeugträgeraufnahme
- 2: Zentrierzylinderaufnahme
- 3: stirnseitige Plananlage
- 4: bolzenförmige Lagefixierung
- 5: Gegengewinde
- 6: Werkzeugträger
- 7: Zentrierzylinder
- 8: stirnseitige Plananlage
- 9: Ausnehmung
- 10: Werkzeugaufnahme
- 11: axiale Grundeinstellungseinrichtung
- 12: Kanal
- 13: Anlagefläche
- 14: Spannring
- 15: Anlagefläche
- 16: Innengewinde

- A: Achse

## Patentansprüche

1. Vorrichtung zur Aufnahme eines Werkzeugs oder Trägerteils bei einer Werkzeugmaschine oder Spindel
mit einer an der Werkzeugmaschine oder Spindel angeordneten Werkzeugträgeraufnahme (1),
mit einem eine Werkzeugaufnahme (10) für das Werkzeug aufweisenden Werkzeugträger (6) und
mit einer Spanneinrichtung zum Fixieren des Werkzeugträgers (6) an der Werkzeugträgeraufnahme (1),
wobei die beiden Bereiche des Werkzeugträgers (6) zum einen für die Werkzeugaufnahme (10) sowie zum anderen für die Aufnahme des Werkzeugträgers (6) in der Werkzeugträgeraufnahme (1) mit der Spanneinrichtung in Achsrichtung gesehen im Sinne einer Überlappung der Längsbereiche ineinander verschmolzen sind,
**dadurch gekennzeichnet,**
**daß** die Werkzeugträgeraufnahme (1) eine Zentrierzylinderaufnahme (2), eine stirnseitige Plananlage (3) sowie ein Außengewinde (5) aufweist,
**daß** der Werkzeugträger (6) einen Zentrierzylinder (7) sowie ein radial abstehendes Anlagealement mit einer rückseitigen Ablagefläche (13) sowie mit einer stirnseitigen Plananlage (8) aufweist und
**daß** als Spanneinrichtung ein Spannring (14) mit einem Innengewinde (16) sowie mit einer radial nach innen gerichteten, einen geringeren Innendurchmesser als der Außendurchmesser des Werkzeugträgers (6) aufweisende Anlagefläche (15) vorgesehen ist,
wobei der Zentrierzylinder (7) des Werkzeugträgers (6) in der Zentrierzylinderaufnahme (2) der Werkzeugträgeraufnahme (1) aufgenommen ist und
wobei die stirnseitige Plananlage (8) des Werkzeugträgers (6) an der stirnseitigen Plananlage (3) der Werkzeugträgeraufnahme (1) und die Anlagefläche (15) des Spannringes (14) an der rückseitigen Anlagefläche (13) des Werkzeugträgers (6) anliegt, so daß das radial abstehende Anlageelement des Werkzeugträgers (6) zwischen dem auf die Werkzeugträgeraufnahme (1) überwurfartig aufgeschraubten Spannring (14) und der Werkzeugträgeraufnahme (1) fixiert ist.

## Claims

1. Device for holding a tool or carrier part on a machine tool or spindle,
with a tool carrier receiver (1) arranged on the machine tool or spindle,
with a tool carrier (6) having a tool receiver (10) for the tool, and
with a clamping device to fix the workpiece carrier (6) to the tool carrier receiver (1),
where the two areas of the tool carrier (6), firstly for the tool receiver (10) and secondly for the receiver of the tool carrier (6) in the tool carrier receiver (1) with the clamping device, are fused together in the sense of an overlap of their longitudinal areas viewed in the axial direction,
**characterised in that**
the tool carrier receiver (1) has a centring cylinder receiver (2), a face-side plane stop (3) and an external thread (5),
**in that** the tool carrier (6) has a centring cylinder (7) and a radially protruding stop element with a rear stop surface (13) and a face plane stop (8), and
**in that** as a clamping device is provided a clamping ring (14) with an internal thread (16) and a radially inwardly facing stop surface (15) with a smaller internal diameter than the external diameter of the tool carrier (6),
where the centring cylinder (7) of the tool carrier (6) is held in the centring cylinder receiver (2) of the tool carrier receiver (1), and
where the face plane stop (8) of the tool carrier (6) lies on the face plane stop (3) of the tool carrier receiver (1), and the stop surface (15) of the clamping ring (14) lies on the rear stop surface (13) of the tool carrier (6) so that the radially protruding stop element of the tool carrier (6) is fixed between the tool carrier receiver (1) and the clamping ring (14) which is screwed in the manner of a union nut onto the tool carrier receiver (1).

## Revendications

1. Dispositif pour le logement d'un outil ou d'une partie support dans une machine-outil ou une broche, muni d'un logement pour porte-outil (1) placé sur la machine-outil ou sur la broche, d'un porte-outil (6) présentant un logement d'outil (10) pour l'outil, et les deux parties du porte-outil (6) étant, d'une part pour le logement d'outil (10) ainsi que d'autre part pour le logement du porte-outil (6) dans le logement pour porte-outil (1) avec le dispositif de serrage, fusionnées l'une dans l'autre en vue d'obtenir, vu dans le sens de l'axe, un chevauchement des parties longitudinales, ainsi que d'un dispositif de serrage pour la fixation du porte-outil (6) sur le logement pour porte-outil (1), **caractérisé en ce que** le logement pour porte-outil (1) présente un logement pour cylindre de centrage (2), une butée plane (3) du côté frontal ainsi qu'un filetage extérieur (5), **en ce que** le porte-outil (6) présente un cylindre de centrage (7) ainsi qu'un élément de butée saillant radialement comportant une surface de butée (13) du côté arrière ainsi qu'une butée plane (8) du côté frontal, et **en ce que** comme dispositif de fixation est prévu un anneau de serrage (14) comportant un filetage intérieur (16) ainsi qu'une surface de butée (15) saillante radialement vers l'intérieur, un diamètre intérieur plus petit que le diamètre extérieur du porte-outil (6), le cylindre de centrage (7) du porte-outil (6) étant logé dans le logement pour cylindre de centrage (2), et la butée plane (8) du côté frontal du porte-outil (6) prenant appui contre la butée plane (3) du côté frontal du logement pour porte-outil (1) et la surface de butée (15) de l'anneau de serrage (14) prenant appui contre la surface de butée (13) du côté arrière du porte-outil (6), de telle sorte que l'élément d'appui du porte-outil (6) saillant radialement est fixé entre l'anneau de serrage (14) vissé de manière recouvrante sur le logement pour porte-outil (1) et le logement pour porte-outil (1).
